# EUROPEAN PATENT APPLICATION

(11) **EP 2 230 270 A1**
(43) Date of publication of application: **22.09.2010**
(21) Application number: 10156887.1
(22) Date of filing: 18.03.2010
(51) Int. Cl.: C08K 5/103, B32B 27/18

(54) **Thermoplastic packaging material containing an anti-adhesion agent**

(30) Priority: 20.03.2009 FI 20095293
(71) Applicant: Oy KWH Plast Ab, 68600 Jakobstad (FI)
(72) Inventor: Bergström, Christer, 02170, Espoo (FI); Elenius, Leif, 68600, Jakobstad (FI)
(74) Representative: Pitkänen, Kirsi-Marja

(57) **Abstract**

The present invention provides a thermoplastic packaging material with improved release characteristics. More specifically, the present invention provided a packaging material comprising a thermoplastic polymer containing a hydrophobic polyol ester of a di-, tri- or polyhydric alcohol having a chain length of at least 4 carbon atoms and a fatty acid, or a blend thereof in an amount sufficient to provide an anti-adhesion effect to a packaged product.

## Description

### Field of the invention

The invention relates to a thermoplastic packaging material in various forms, like films, webs or sheets, containing an anti-adhesion agent which provides non-stick properties to the packaging material and thus prevents a sticky content from adhering to the thermoplastic packaging material. Especially, sticky foodstuffs like soft cheese, peanut butter and paste-like products tend to stick to thermoplastic packaging materials. This effect becomes more stressed if the foodstuff comes in contact with the thermoplastic packaging material when it is hot and fluid. These sticking problems also tend to become worse during prolonged storage times.

The present invention is especially useful for individually wrapped slices (IWS) of cheese.

### Background of the invention

When molten cheese is packed as individually wrapped slices (IWS) with a film made of polypropylene (PP) homopolymer, problems with sticking may occur immediately or after some period of time. Since the IWS packages are heat sealed, the layer of the PP film which comes in contact with the molten cheese needs to have a melting point which is lower than that of PP homopolymer which further increases the sticking problem. Since most of the components in molten cheese are hydrophilic (including more than 50% of water), the sticking problems become even more stressed in cases where the sealing layer in the multilayer PP film contains hydrophilic groups like acetate (ethylene vinyl acetate (EVA)), alkylacrylate (ethylene methyl acrylate (EMA), ethylene ethyl acrylate (EEA), ethylene butyl acrylate (EBA)), carboxylic acid (ethylene acrylic acid (EAA), ethylene methacrylic acid (EMAA), and the like, providing enhanced sealing properties to the film. Also, the type and the chemical composition of cheese which changes over time can have a significant effect on the sticking problem described above. Further, the type and the amount of a salt, the emulsifying agents, and the fat content of cheese are significant. One having ordinary skill in the art recognizes that the lower the salt and fat contents the worse are the sticking problems.

EP 1362792 A2 discloses a plastic packaging material for foodstuffs like cheese, molten cheese, peanut butter, cream cheese, dressings, gelatine and dairy products in which the plastic composition of the entire packaging material or at least the layer which is in contact with the foodstuff contains glycerol monostearate (GMS) in a concentration of at least 4000 ppm. This compound is said to prevent especially cheese and molten cheese from sticking to the packaging material for some period of time. However, GMS is rather hydrophilic, wherefore it is commonly used as an antifogging agent in plastic films, and migrates rather rapidly due to its low molecular weight. It is absorbed by the hydrophilic cheese and extracts in a few months from the surface of the plastic packaging material which causes sticking problems. Only by adding very high amounts of GMS this sticking problem be can delayed. Even if it is permitted to use GMS as an emulsifying agent in foodstuffs, designated as E 471, it is obviously not desirable to have high concentrations of it in the food products.

EP 1808291 A1 discloses a solution to the problems related to GMS. By using polyol ester additives based on fatty acids with longer chain lengths than stearic acid (C18) the migration speed of the polyol esters is reduced and the foodstuff can be stored for a longer time before the sticking problems appear. It is further disclosed that even a small increase in the chain length of the fatty acid group had a dramatic decreasing effect on the sticking problem so that significantly lower amounts of the additives could be used. The sticking effect is said to even decrease with storage time. It is specifically mentioned that the reasons for these effects were not known. The most suitable polyol esters are described as glycerol or glycol monoesters with a fatty acid of a chain length of C20 to C30, preferably C20 to C26, and most preferably C22 of glycerol, i.e. glycerol monobehenate.

It has been recognised that hydrophilic glycerol monobehenate still migrates from the thermoplastic packaging material during prolonged storage time in an undesirable manner and is absorbed by the food product causing still sticking problems. Thus, there is still need to provide thermoplastic packaging materials which even more effectively prevent the adhesion of sticky products, in particular sticky food products like molten cheese to plastic packages.

### Brief description of the invention

It is an object of the present invention to provide a thermoplastic packaging material with improved release characteristics. More specifically, the present invention provides a packaging material comprising a thermoplastic polymer containing a hydrophobic polyol ester of a di-, tri- or polyhydric alcohol having a chain length of at least 4 carbon atoms and a fatty acid, or a blend thereof, in an amount sufficient to provide an anti-adhesion effect to a packaged product.

The invention also provides a use of a packaging material of the invention for packaging of sticky food products, particularly molten cheese.

The invention further provides a packaging containing a sticky food product in the packaging material of the invention.

It was surprisingly found that by using high molecular weight hydrophobic polyol esters or their blends with the chain lengths of an alcohol group of at least 4 carbon atoms as an additive in a thermoplastic packaging material the adhesion of sticky food products like molten cheese can be avoided. Without binding to any theories, it is assumed that owing to the higher molecular weights of these additives, provided by the higher chain length of an alcohol radical in the polyol ester compared to those of monoglycerol monoesters mentioned above, the migration of said additives in the thermoplastic material, like film, towards an interface between the material and the packaged food product and out of the material is slower, wherefore an interface providing an effect of non-adhesion is maintained for a prolonged period of time.

It has also been noticed that the polyol esters used in the present invention are more hydrophobic than the monoglycerol monoesters used in the prior art. Especially, the higher the esterification degree of the polyol ester of the invention, the higher is the hydrophobicity and the slower is the migration rate of the polyol ester in the packaging material. Due to the hydrophobic nature of the polyol esters, they tend to remain in the interface between the packaging material and the food product, whereby a substantially reduced absorbtion by the food product, which are commonly hydrophilic in nature, can be recognized. Also, the higher is the molecular weight of the polyol ester, the slower is the migration from the packaging material and the absorption by the food product.

A specific feature of the invention is that by using blends of high molecular weight polyol esters of the invention with lower molecular weight polyol esters, like monoglycerol monoesters, a long-term effect of the adhesion reduction as well as an immediate effect can be obtained. This is based on the discovery that low molecular weight polyol esters migrate more rapidly in a thermoplastic material providing a non-adhesive interface between the material and a food product than high molecular weight polyol esters.

### Detailed description of the invention

The present invention provides a packaging material comprising a thermoplastic polymer containing a hydrophobic polyol ester of a di-, tri- or polyhydric alcohol having a chain length of at least 4 carbon atoms and a fatty acid, or a blend thereof in an amount sufficient to provide an anti-adhesion effect to a packaged product.

In an embodiment of the invention, the di-, tri- or polyhydric alcohol is a polymerized form of a diol, triol or polyol, especially polyglykol, polyglycerol, and polysorbitol. In another embodiment, the polyhydric alcohol is sorbitol. In an embodiment of the invention, the hydrophobic polyol esters are thus di-, tri- or polyglycol esters, di-, tri- or polyglycerol esters, di-, tri or polysorbitol esters, or sorbitane esters, especially polyglycerol esters.

A fatty acid having a varying chain length can be used for esterification of the di-, tri- or polyhydric alcohol defined above. In an embodiment of the invention, the fatty acid group has 18 carbon atoms or less. The preferred chain lengths of the fatty acid radicals are C14, C16 and C18 indicating myristinic acid, palmitinic acid, and stearic acid or oleic acid, respectively. In another embodiment, the fatty acids are preferably saturated.

The esterification of a di-, tri- or polyhydric alcohol can be accomplished with various fatty acids defined above. In an embodiment of the invention, the hydrophobic polyol ester comprises a blend of mono-, di- and higher esters of di-, tri- and/or polyglycerol. A high degree of esterification is preferred in order to obtain hydrophobicity. In an embodiment of the invention, the blend of hydrophobic polyol esters comprises more than 70% of di-, tri-, and higher esters.

In an embodiment of the invention, a hydrophobic high molecular weight polyol ester or a blend thereof further comprises one or more low molecular weight polyol esters like a hydrophilic mono glycerol mono stearate (GMS) or a hydrophobic mono glycerol dibehenate (GDB) etc. This admixture ensures a desired combination of an immediate effect as well as a long-term effect of reduced adhesion of a food product to the packaging material.

High molecular weight hydrophobic polyol esters additives useful in the present invention are commercially available. An example of such hydrophobic polyol esters are Riken Vitamin's RIKEMAL JV-3081 and Danisco's Grindsted^{®} PGE 55, which can be designated as polyglycerol stearates.

The thermoplastic packaging material of the present invention can be used for packaging of any product of food or non-food origin having a tendency to stick to the packaging surface. In particular, it is suitable for packaging of sticky food products, like cheese, molten cheese, peanut butter, cheese cream, dressings, gelatine and other dairy products like ice cream, chocolate, liquorice, etc. The packaging material of the invention can also be used for various non-food applications like paints, patties etc.

The polyol ester additives of the invention can be used in thermoplastic packaging materials of any kind and manufactured with any processing method commonly used for thermoplastics including film extrusion, injection moulding, blow moulding, and a combination of extrusion and thermoforming. The thermoplastics can be manufactured from polymers like polypropylene (PP homopolymer or copolymers), polyethylene (PE homopolymer or copolymers), polyester (polyethylene terephtalate (PET), polybutylene terephtalate (PBT), polyethylene naphtalate (PEN), polybutylene naphtalate (PBN) or any other thermoplastic polyester type) or a copolymer thereof, polyamide (PA-6, PA-B6, PA-11, PA-12, PA-4, PA-MXD or any other polyamide type or a copolymer thereof), polystyrene PS (high impact polystyrene (HIPS), styrene acrylonitrile (SAN), acrylonitrile-butadiene-styrene (ABS), or any other styrene polymer type) or a copolymer thereof, polymethylpentene (PMP), cycloolefin copolymer (COC), polybutylene (PB), and any other thermoprocessable polymer suitable for food packaging.

The polyol ester additives of the invention are especially useful in polypropylene multilayer films used for individually wrapped slices (IWS) of molten cheese. Even if the detailed description below focuses on this embodiment of the invention, it is not intended to limit the invention to this embodiment.

By including to a packaging material a slowly migrating hydrophobic high molecular weight polyol ester or a blend of such polyol esters, a hydrophobic interface between the packaging material and the contents thereof can be provided for a long period of time. This hydrophobic interface containing the polyol ester of the invention has en effect to prevent the adhesion of the packaged content to a packaging material.

A packaging material of the invention can be composed of a uniform material and designed for instance as a single-layer film, where the hydrophobic polyol ester can be homogenously incorporated throughout the packaging material. A packaging can also be manufactured as a multilayer structure, where it is possible to include the polyol ester only into selected regions of the multilayer structure in order to provide the hydrophobic polyol ester appropriately at said interface providing the desired effect of non-adhesion, and not on the other side of the packaging material, facing away from the content.

A multilayer film containing the polyol ester of the invention can be manufactured for example by cast- or blown-film coextrusion, extrusion coating/lamination, adhesive lamination, or any other suitable method known in the art. Such a construction comprises two or more layers, preferably more than two layers.

A specific embodiment of the multilayer films of the invention is IWS films for molten cheese. These multilayer structures for said purpose typically comprise at least a heat sealing layer as an inner layer of a multilayer film, facing to the content of the film, and a supporting layer as an outer layer of the multilayer structure, facing away from the content of the film. The heat sealing layer then comprises a polyolefin with a lower melting point than that of a supporting layer, like PP and/or PE copolymer as a general. More particularly, a heat sealing layer can be composed of a polymer blend of a continuous phase optimised for heat sealing, and a dispersed phase for accommodating the hydrophobic polyol ester. A blend of PP random copolymer and ethylene vinyl acetate (EVA) can be used, for example. The supporting layer is typically composed of PP homopolymer which provides stiffness, low cost, suitable friction factor and other properties which cannot be obtained with a polymer used in the heat sealing layer.

In a multilayer structure of the IWS film of the invention, the polyol ester additive of the invention can be incorporated into one or more layers of the film. An embodiment of the packaging material of the present invention is a two-layer IWS film described above, where the hydrophobic polyol ester is incorporated into a heat sealing layer. The amount of the polyol ester in the heat sealing layer can vary from 10 000 ppm to 30 000 ppm. Preference is given to 20 000 ppm.

The IWS films can further comprise an intermediate layer of a rather hydrophobic polyolefin with low crystallinity, like a plastomer (usually a polypropylene or polyethylene based copolymer with a low melting point) etc. In this embodiment of the invention, the hydrophobic polyol ester is incorporated into the intermediate layer. The intermediate layer slowly releases the polyol ester through a thin heat sealing layer to an interface between the film and a food product. This construction can be designed as a three-layer film.

The IWS films can further comprise a barrier layer between the intermediate layer and the supporting layer, for example of very highly crystalline PP, which prevents the hydrophobic polyol ester to migrate from the intermediate layer towards the supporting layer of the film, facing away from the content of the film. This multilayer structure can be designed, for example, as a four-layer film.

The IWS films can further comprise a gas barrier layer including, for example, ethylene vinyl alcohol copolymer (EVOH) against oxygen, modified atmosphere, odours, fragrances, etc.

A specific embodiment of the invention is a two-layer IWS film where the polyol ester is incorporated in a heat sealing layer.

The multilayer films of the invention can be non-oriented (cast), monoaxially oriented (MOPP) or biaxially oriented (BOPP). In a preferred embodiment, the film is oriented providing stiffer films with better barrier properties enabling downgauging of the film.

The total thicknesses of the IWS films of the invention are in the range of 10-40 µm, preferably 15-30 µm, and more preferably 20-28 µm. Typically, the heat sealing layer constitutes 10% to 20% of the total thickness of the IWS film. Percentage relative thicknesses of the layers in various multilayer film constructions are given below for exemplary purposes:
two-layer film: 85% supporting layer/15% heat sealing layer (containing hydrophobic polyol ester of the invention)
three-layer film: 50% supporting Iayer/40% intermediate layer (containing hydrophobic polyol ester of the invention)/10% heat sealing layer
four-layer film: 30% supporting layer/ 20% barrier layer/40% intermediate layer (containing hydrophobic polyol ester of the invention)/10% heat sealing layer

A sufficient amount of the hydrophobic polyol ester as an additive for the desired activity can be determined. The amount of a high molecular weight hydrophobic polyol ester in an IWS film depends on various factors, like the total thickness of the film, the thickness of the layer the polyol ester has been incorporated into, the chemical compositions and morphologies of all layers, the chemical composition of the high molecular weight hydrophobic polyol ester, the chemical composition of the cheese, the filling temperature of the cheese, the storage time requirements of the cheese etc. The amount of the polyol ester in the IWS film is typically in the range of 400-5 000 ppm, preferably 700-4 000 ppm and more preferably 1 000-3 000 ppm.

An IWS film of the present invention can further comprise a low molecular weight polyol ester like GMS (glycerol monostearate) or GDB (glycerol dibehenate) in an amount of 100-10 000 ppm. As stated above, a combination of an immediate effect and a long-term effect of non-adhesion of the film to the packaged material can be obtained in this manner.

In the manufacture of the thermoplastic packaging materials of the invention, the hydrophobic polyol esters can be included as such to the film-extrusion process of a thermoplastic material by pumping/feeding, dry-blending etc. In another embodiment and most conveniently, a masterbatch with all components is first manufactured, having a concentration of about 10% of the polyol esters of the invention. This masterbatch is then diluted in the film-extrusion process to include a concentration of about 1% of the polyol esters and to be used as a layer of the various packages of the invention.

In order to further demonstrate the invention the following non-limiting examples are given.

### Examples

A very specific type of cheese, Hochland's Almtaler Chester Schmelzkäse, was used in the following test. Slices of this cheese were packed in IWS films composed of two layers. The packages were stored at 23°C and 50% RH for total of 6 months. The adhesion of the product to the IWS films was tested at intervals of 1 month. The 0-test was made after 1 hour.

In Table 1 below, symbols A, B, and C have the following meanings.
A: Cheese slices release easily with no adhesion to the IWS film.
B: Small pieces of cheese remain on the IWS film
C: Cheese slices break when detaching from the IWS film.

The tested IWS films contained the following polyol ester additives in an amount of 2% in the heat sealing layer of the films.
Example 1: Rikemal JV-3081 (Riken Vitamins)
Example 2: Grindsted^{®} PGE 55 (Danisco A/S)
Example 3: Grindsted^{®} PGE 308 (Danisco A/S)
Example 4: PS 4306 (Esterchem Ltd.)
Example 5 Admul^{™} PGE 1405 (Kerry Bio-Sciences)
Example 6: Admul^{™} T-60 (Kerry Bio-Sciences)
Example 7: Rikemal JV-3081 (1%) + monoglycerol monostearate (GMS) (Ciba-Geigy Co.)
Reference 1: Atmer^{™} 122 (Ciba-Geigy Co.)
Reference 2: Compritol 888 (Gattefosse)

**Table 1:**

| Example | Product | Type | Storage time 1 hour | Storage time (months) | | | | | |
|---|---|---|---|---|---|---|---|---|---|
| | | | | 1 | 2 | 3 | 4 | 5 | 6 |
| 1 | Rikemal V-3081 | Polyglycerol polystearate | B | A | A | A | A | A | A |
| 2 | Grindsted PGE 55 | Polyglycerol polystearate | B | A | A | A | A | A | A |
| 3 | Grindsted PGE 308 | Polyglycerol polypalmitate | B | A | A | A | A | B | B |
| 4 | PS 4306 | Polyglycerol polyricinoleate | B | A | A | A | B | B | B |
| 5 | Admul PGE 405 | Polyglycerolester | B | A | A | A | A | A | A |
| 6 | Admul T∼60 | Polysorbate | B | A | A | A | B | B | B |
| 7 | Rikemal JV-3081 (1%) + GMS (1%) | | A | A | A | A | A | A | A |
| Reference 1 | Atmer 122 | Monoglycerol monostearate (GMS) | A | A | A | B | C | C | C |
| Reference 2 | Compritol 888 | Monoglycerol dibehenate (GDB) | A | A | A | A | B | C | C |

It can be seen from the results that hydrophobic polyol esters having high molecular weight, especially polyglycerol esters, like polyglycerol stearate, have a better performance during prolonged storage time than hydrophobic polyol esters having low molecular weight, like monoglycerol dibehenate (GDB) and, in particular, low molecular weight hydrophilic polyol esters, like monoglycerol monostearate (GMS). Deterioration of the test results for GMS and GDB during prolonged storage times indicates that said substances migrate from the packaging material and the packaging surface becomes deficient in these additives.

It will be obvious to a person skilled in the art that, as the technology advances, the inventive concept can be implemented in various ways. The invention and its embodiments are not limited to the examples described above but may vary within the scope of the claims.

## Claims

1. A packaging material comprising a thermoplastic polymer containing a hydrophobic polyol ester of a di-, tri- or polyhydric alcohol having a chain length of at least 4 carbon atoms and a fatty acid, or a blend thereof in an amount sufficient to provide an anti-adhesion effect to a packaged product.

2. The packaging material according to claim 1, wherein the polyhydric alcohol is sorbitol.

3. The packaging material according to claim 1, wherein the di-, tri- or polyhydric alcohol is a polymerized form of a diol, triol or polyol, especially polyglycol or polyglycerol.

4. The packaging material according to any of claims 1 to 3, wherein the fatty acid has a chain length of C18 or below, especially C14, C16 or C18.

5. The packaging material according to any of claims 1 to 4, wherein the blend of the hydrophobic polyol esters comprises more than 70% of di-, tri-, and higher esters.

6. The packaging material according to any of claims 1 to 5, wherein the blend of the hydrophobic polyol esters comprises low molecular weight glycerol monoester and/or diester, like glycerol monostearate and/or glycerol dibehenate.

7. The packaging material according to any of claims 1 to 6, wherein the packaging material is in a form of a film, preferably multilayer film, made of polypropylene and/or polyethylene and/or their copolymers.

8. The packaging material according to claim 7, wherein the multilayer film is an IWS film.

9. The packaging material according to claim 7 or claim 8, wherein the hydrophobic polyol ester is contained in a heat sealing layer and/or in an intermediate layer of the multilayer film, located next to the heat sealing layer of the film.

10. The packaging material according to any of claims 7 to 9, comprising one of more barriers layer preventing the hydrophobic polyol ester from migrating from the interface between the packaging material and the packaged product, and/or against oxygen, modified atmosphere, odours, fragrances, etc.

11. The packaging material according to any of claims 1 to 10, wherein the polyol ester is present in amount of 400-5 000 ppm, preferably 700-4 000 ppm and more preferably 1 000-3 000 ppm.

12. The packaging material according to any of claims 7 to 11, wherein the film is oriented monoaxially (MOPP) or biaxially (BOPP).

13. Use of the packaging material of any of claims 1 to 12 for packaging of sticky food products.

14. A packaging for a sticky food product, particularly cheese, comprising a packaging material according to any of claims 1-12.

15. The packaging of claim 14 in a form of individually wrapped slices (IWS).
